# EUROPÄISCHE PATENTSCHRIFT

(11) **EP 3 137 408 B1**
(45) Veröffentlichungstag und Bekanntmachung des Hinweises auf die Patenterteilung: **27.03.2019**
(21) Anmeldenummer: 15723653.0
(22) Anmeldetag: 29.04.2015
(51) Int. Cl.: B01F 13/00, B66C 23/78, B01F 15/00, B60S 9/02, E04G 21/04

(54) **RAHMENABSTÜTZUNG**
FRAME SUPPORT
SUPPORT DE CHÂSSIS

(30) Priorität: 02.05.2014 DE 102014006273
(43) Veröffentlichungstag der Anmeldung: 08.03.2017
(73) Patentinhaber: Schwing GmbH, 44653 Herne (DE)
(72) Erfinder: OLEKSYUK, Mykola, 45527 Hattingen (DE); SCHEFFER, Heinrich, 45721 Haltern am See (DE)
(74) Vertreter: Isfort, Olaf
(86) Internationale Anmeldenummer: PCT/EP2015/059315
(87) Internationale Veröffentlichungsnummer: WO 2015/165950

(56) Entgegenhaltungen:
- EP-A1- 0 661 196
- EP-A1- 0 899 173
- WO-A1-2013/113225
- JP-A- S5 442 758
- JP-U- S55 160 956
- US-E- R E24 482

## Beschreibung

Die Erfindung betrifft eine Rahmenabstützung für ein Fahrzeug, sowie die Verwendung der Rahmenabstützung in einer Autobetonpumpe und ein Fahrzeug mit einer Rahmenabstützung.

Abstützsysteme für Fahrzeuge sind aus dem Stand der Technik, beispielsweise aus WO 2013/113225 A1, aus EP 0 899 173 A1, aus JP S55 160956 U oder aus JP S54 42758 A bekannt. Insbesondere Fahrzeuge mit darauf aufgebautem, schwenkbarem Mast, wie z.B. einem Verteilermast einer Autobetonpumpe, weisen derartige Abstützsysteme auf. Die Masten erreichen beträchtliche Höhen und lösen ein von der Schwenkposition und der Länge des Mastes abhängiges Kippmoment aus. Die Abstützung trägt das Kippmoment auf der Standfläche des Fahrzeugs ab und verhindert dadurch das Umschlagen des Fahrzeuges mit dem Mast.

Die Anforderungen an die Mastlänge sowie die Reichweite wächst immer weiter, wodurch auch immer größere Abstützbreiten notwendig werden. Indem jedoch die Maße des Fahrzeugprofils aufgrund gesetzlicher Regelungen bestimmte Grenzen nicht ohne Weiteres überschreiten dürfen, bedarf es spezieller Überlegungen, um den größeren Abstützbreiten gerecht zu werden, ohne dabei zulässige Fahrzeugbreiten zu überschreiten. Aus dem Stand der Technik sind Autobetonpumpen bekannt, die Teleskopführungen aufweisen, die sich hinter dem Drehschemel kreuzen. Nachteilig bei einer derartigen Anordnung ist jedoch, dass die Führungen viel Platz benötigen, so dass die Pumpenbatterie verkürzt werden muss. Hierdurch muss die Anzahl der Umschaltvorgänge des Betonschaltventils erhöht werden, wodurch die Pumpenbatterie insgesamt unruhiger und ineffizienter arbeitet. Die Mastschwingung wächst zudem an.

Um ein ruhigeres und effizienteres Arbeiten der Pumpenbatterie ermöglichen zu können, offenbart die EP 0 661 196 A1 eine Rahmenabstützung, welche fahrzeugfeste bogenförmige Führungen für in das Fahrzeugprofil einziehbare Ausschubträger aufweist, wobei sich die Führungen im Wesentlichen zwischen den Fahrzeugprofillängsseiten erstrecken. Die Mitte des Fahrzeugrahmens bleibt frei, so dass ausreichend Platz für die Pumpenbatterie verbleibt. Nachteilig hierbei ist allerdings, dass eine derartige Abstützung viel Platz beim Aus- bzw. Einfahren der Ausschubträger benötigt. Dies hat zur Folge, dass der Achsabstand zwischen den lenkbaren Vorderachsen vergrößert werden muss, indem die hintere Vorderachse nach hinten versetzt wird. Hierdurch entstehen hohe Kosten. Ferner erhöht sich durch das Versetzen der hinteren Achse die nominelle Anzahl der Achsen, da bei der Zulassung nur sehr eng beieinander stehende Achsen als eine Achse angesehen werden.

Es ist daher Aufgabe der Erfindung, eine Rahmenabstützung bereitzustellen, durch die ein Umkippen des Fahrzeugs trotz beträchtlicher Höhe des Mastes verhindert wird, ohne dass damit eine Beeinträchtigung der Betonförderung einhergeht. Zudem ist es Aufgabe der Erfindung, eine Rahmenabstützung bereitzustellen, die sich ohne großen Aufwand und Umbaumaßnahmen in Fahrzeuge, insbesondere LKWs integrieren lässt. Ferner soll die Rahmenabstützung mit geltenden Normen und Vorschriften ohne Weiteres vereinbar sein.

Gelöst wird diese Aufgabe durch eine Rahmenabstützung für ein Fahrzeug mit den Merkmalen des Anspruchs 1 sowie ein Fahrzeug mit den Merkmalen des Anspruchs 8. Vorteilhafte Ausgestaltungen sind jeweils Gegenstand der abhängigen Ansprüche. Es ist darauf hinzuweisen, dass die in den Ansprüchen einzeln aufgeführten Merkmale auch in beliebiger und technologisch sinnvoller Weise miteinander kombiniert werden können und somit weitere Ausgestaltungen der Erfindung aufzeigen.

Eine erfindungsgemäße Rahmenabstützung für ein Fahrzeug weist einen Ausschubträger, eine Führung, an der der Ausschubträger axial beweglich geführt ist, und eine vertikale Abstützeinheit auf. Die erfindungsgemäße Rahmenabstützung ist dabei dadurch kennzeichnet, dass die vertikale Abstützeinheit am freien Ende des Ausschubträgers außermittig angeordnet ist.

Die erfindungsgemäße Rahmenabstützung weist gegenüber dem Stand der Technik den Vorteil auf, dass durch die asymmetrische Anordnung der vertikalen Abstützeinheit am Ausschubträger beim Aus- bzw. Einfahren der Stütze weniger Raum benötigt wird. Bei LKW-Fahrgestellen mit zwei lenkbaren Vorderachsen kann der serienmäßige Abstand zwischen den vorderen Lenkachsen, der bei ca. 170-175 cm liegt, eingehalten werden. Ein Versetzen der hinteren Vorderachse ist nicht mehr notwendig. Indem die Achsen somit eng beieinander stehen, werden die Achsen bei der Zulassung als eine Achse angesehen, wodurch Fahrzeuge mit der erfindungsgemäßen Rahmenabstützung keine Probleme bei der Zulassung haben. Ferner ist die erfindungsgemäße Rahmenabstützung auch mit der Euro-6-Abgasnorm vereinbar. Bei LKWs, die die erfindungsgemäße Rahmenabstützung aufweisen, verbleibt hinreichend Platz, um zusätzliche Bauteile der Abgasreinigungsanlage aufnehmen zu können.

Erfindungsgemäß bedeutet außermittig, dass die vertikal verlaufende Mittenlängsachse der vertikalen Abstützeinrichtung sich nicht mit der Mittenlängsachse des Ausschubträgers kreuzt. Die Mittenlängsachse der vertikalen Abstützeinrichtung verläuft seitlich versetzt zur Mittenlängsachse des Ausschubträgers. Im Sinne der Erfindung wird unter Mittenlängsachse des Ausschubträgers insbesondere diejenige Linie verstanden, die in vertikaler Draufsicht die Kontur des Ausschubträgers halbiert.

Vorteilhaft ist die Mittenlängsachse der vertikalen Abstützeinheit am freien Ende des Ausschubträgers gegenüber der Mittenlängsachse desselben nach innen, d.h. zur Fahrzeugmitte hin versetzt.

Durch die außermittige Anordnung der vertikalen Abstützeinheit und insbesondere in Kombination mit der nach innen versetzten Anordnung ist es möglich, die vertikale Abstützeinheit im eingefahrenen Zustand der Stütze sehr nah an der Fahrzeugaußenseite zu positionieren. Der Ausschubträger muss somit nicht mehr so weit in die Führung hineingefahren werden, damit alle Teile der Rahmenabstützung innerhalb des Fahrzeugprofils liegen. Die Ein- bzw. Ausfahrwege sowie die -dauer können verkürzt werden.

Vorzugsweise ist die Mittenlängsachse der vertikalen Abstützeinheit gegenüber der Mittenlängsachse des Ausschubträgers am freien Ende desselben um wenigstens 10%, vorzugsweise um wenigstens 25% der Breite des Ausschubträgers nach innen versetzt. Dies reicht zur Lösung der zu Grunde liegenden Aufgabe aus.

Die Führung und der Ausschubträger sind bogenförmig ausgebildet. Durch die bogenförmige Ausgestaltung wird erreicht, dass die Stütze weiter zur Seite des Fahrzeugs ausfahren kann, so dass dem Kippen des Fahrzeugs um die eine oder andere Fahrzeuglängsseite wirksam entgegengewirkt werden kann. Die Führung ist dabei bevorzugt so ausgebildet, dass sie bei Einbau in einem Fahrzeug im Bogen tangential zur Fahrzeuglängsrichtung verläuft und sich dabei von einer der Fahrzeugprofillängsseiten nach innen im Wesentlichen bis zur Fahrzeugmitte und von dieser weiter bis zu derselben Fahrzeugprofillängsseite erstreckt. Hierdurch können besonders lange Ausschubträger, die für den Fahrbetrieb im Fahrzeugprofil untergebracht werden können, verwendet werden. Gleichzeitig verbleibt ausreichend Platz für die Pumpenbatterie.

Die Führung der erfindungsgemäßen Rahmenabstützung kann in einem Hohlprofilabschnitt untergebracht sein. Es kann sich dabei um Gleitbahnen handeln, die eine drehfeste Führung für den Ausschubträger gewährleisten. Zur Gewährleistung besserer Gängigkeit des Ausschubträgers in dem Hohlprofil kann die Führung auch ganz oder zum Teil aus Wälzkörpern bestehen. Der Hohlprofilabschnitt kann rechteckig oder aber auch kreisförmig ausgebildet sein. Der Ausschubträger bildet bevorzugt mit dem Hohlprofilabschnitt ein Teleskop.

Der Ausschubträger kann ein- oder mehrfach teleskopierbar ausgebildet sein. Der Ausschubträger kann somit in einem komplett ausgefahrenen Zustand eine größere Ausdehnung aufweisen als die Führung. Im eingefahrenen Zustand weist der Ausschubträger höchstens die Ausmaße der Führung bzw. des Hohlprofilabschnitts auf. Hierdurch kann die Abstützlänge bzw. -breite weiter vergrößert werden.

Die vertikale Abstützeinheit kann teleskopierbar ausgebildet sein. Hierbei umfasst sie bevorzugt ein Außenteleskop, das am Ausschubträger angeordnet ist, und ein Innenteleskop, das in das Außenteleskop ein- und ausgefahren werden kann.

Vorteilhafterweise weist die vertikale Abstützeinheit einen runden Querschnitt auf. Durch die Verwendung von Abstützeinheiten mit reduziertem Rohrdurchmesser kann die Einbausituation weiter verbessert werden. Es ist aber auch denkbar, dass der Querschnitt eckig, bevorzugt quadratisch ist.

Die vertikale Abstützeinheit kann eine Stützfußplatte aufweisen, die bevorzugt an dem freien Ende des Innenteleskops angeordnet ist. Die Stützfußplatte dient dazu, den Stützdruck auf die Standfläche zu übertragen. Indem die erfindungsgemäße vertikale Abstützeinheit in einem eingefahrenen Zustand der Stütze weiter außen liegt als bei den aus dem Stand der Technik bekannten Abstützsystemen, sollte die Stützfußplatte möglichst klein sein, damit sie nicht über die Fahrzeugaußenseite hinausragt. Bevorzugt ist die Stützfußplatte rund.

Bevorzugt weist die vertikale Abstützeinheit ein Gelenk auf. Durch das Gelenk ist es möglich, die Stützfußplatte beim Hochfahren der vertikalen Abstützeinheit seitlich zu verschwenken. Hierdurch wird erreicht, dass im eingefahrenen Zustand alle Teile der Stütze innerhalb der Fahrzeugbreite liegen. Besonders bevorzugt ist das Innenteleskop mit der Stützfußplatte über das Gelenk verbunden. Als Gelenk kann beispielsweise ein Kugelkopf benutzt werden.

Die vertikale Abstützeinheit kann eine Gummimanschette aufweisen. Die Gummimanschette ist bevorzugt am freien Ende des Außenteleskops angeordnet. Ist die vertikale Abstützeinheit im eingefahrenen Zustand, so weist die Gummimanschette senkrecht zur Fahrzeugrichtung eine rechtwinklige Trapezform auf. Die der Fahrzeugaußenseite zugewandte Seite der Gummimanschette ist dabei länger ausgebildet als die der Fahrzeugmitte zugewandte Seite. Erreicht beim Einfahren des Innenteleskops die Stützfußplatte die Gummimanschette, so wird diese durch die Gummimanschette nach innen geklappt.

Besonders vorteilhaft ist die Verwendung der erfindungsgemäßen Rahmenabstützung zur Abstützung des Fahrzeugrahmens einer Autobetonpumpe. Bei Verwendung der erfindungsgemäßen Rahmenabstützung mit bogenförmigem Ausschubträger bleibt die Mitte des Fahrzeugrahmens frei, so dass ausreichend Platz für eine lange Pumpenbatterie verbleibt. Hierdurch können die Umschaltvorgänge des Betonschaltventils verringert werden, wodurch die Pumpenbatterie insgesamt ruhiger und effizienter arbeitet. Die Mastschwingung nimmt ab. Die Verwendung der erfindungsgemäßen Rahmenabstützung in einer Autobetonpumpe hat insgesamt den Vorteil, dass die zulässige Fahrzeugbreite nicht überschritten werden muss. Einschränkungen für Sondertransporte können umgangen werden, die bei Überbreite bzw. Überlänge von Fahrzeugen allgemein gefordert werden.

Ferner ist Gegenstand der vorliegenden Erfindung ein Fahrzeug mit wenigstens einer erfindungsgemäßen Rahmenabstützung. Die wenigstens eine Führung der Stütze erstreckt sich dabei im Wesentlichen zwischen den Fahrzeugprofillängsseiten. Befindet sich die Stütze im eingefahrenen Zustand, dann befinden sich alle Teile der Stütze zwischen den Fahrzeugprofillängsseiten.

Die erfindungsgemäße Rahmenabstützung ist bevorzugt derart am Fahrzeug angeordnet, dass der Ausschubträger zwischen den beiden beweglichen vorderen Achsen aus dem Fahrzeug aus- bzw. eingefahren werden kann. Durch die erfindungsmäße Anordnung der vertikalen Abstützeinheit am Ausschubträger kommt es auch bei LKW-Fahrgestellen mit zwei lenkbaren Vorderachsen, die einen serienmäßigen Abstand von etwa 170-175 cm aufweisen, beim Aus- bzw. Einfahren des Ausschubträgers nicht zu einer Kollision zwischen vertikaler Abstützeinheit und Rädern. Eine Versetzung einer der Vorderachsen ist somit nicht mehr notwendig, wodurch Probleme bei der Zulassung vermieden werden und Kosten für den Umbau am LKW entfallen.

Die Führung und der Ausschubträger sind vorteilhafterweise bogenförmig ausgebildet. Durch die bogenförmige Ausgestaltung wird erreicht, dass die Stütze weiter zur Seite des Fahrzeugs ausfahren kann, so dass dem Kippen des Fahrzeugs um die Fahrzeugachsen auch bei ausgefahrenen, sehr langen Mastauslegern wirksam entgegengewirkt werden kann. Die Führung ist dabei bevorzugt so ausgebildet, dass sie bei Einbau in das Fahrzeug im Bogen tangential zur Fahrzeuglängsrichtung verläuft und sich dabei von einer der Fahrzeugprofillängsseiten nach innen im Wesentlichen bis zur Fahrzeugmitte und von dieser weiter bis zu derselben Fahrzeugprofillängsseite erstreckt. Hierdurch können besonders lange Ausschubträger, die für den Fahrbetrieb im Fahrzeugprofil untergebracht werden können, verwendet werden.

Vorteilhafterweise ist die vertikale Abstützeinheit außermittig und nach innen versetzt am freien Ende des Ausschubträgers angeordnet. Nach innen versetzt bedeutet erfindungsgemäß, dass die vertikale Abstützeinheit auf der Seite des Ausschubträgers angeordnet ist, die zur Fahrzeugmitte hinzeigt. Die Mittenlängslachse der vertikalen Abstützeinheit befindet sich somit bei Draufsicht von oben auf das Fahrzeug zwischen der Fahrzeugmitte und der Mittenlängsachse des Ausschubträgers an dessen freiem Ende. Durch diese Anordnung ist es möglich, die vertikale Abstützeinheit im eingefahrenen Zustand der Rahmenabstützung sehr nah an der Fahrzeugaußenseite zu positionieren. Der Ausschubträger muss somit nicht so weit in die Führung hineingefahren werden, damit alle Teile der Rahmenabstützung innerhalb des Fahrzeugs liegen. Die Ein- bzw. Ausfahrwege sowie die -dauer können somit verkürzt werden.

Vorzugsweise ist die Mittenlängsachse der vertikalen Abstützeinheit gegenüber der Mittenlängsachse des Ausschubträgers am freien Ende desselben um wenigstens 10%, vorzugsweise um wenigstens 25% der Breite des Ausschubträgers nach innen versetzt ist. Dies reicht zur Lösung der zu Grunde liegenden Aufgabe aus. Anderseits sind die durch den seitlichen Versatz der vertikalen Abstützeinheit in den Ausschubträger eingeleiteten Kippmomente hinreichend klein, soweit der seitliche Versatz weniger als 50% der Breite des Ausschubträgers entspricht. Die Breite des Ausschubträgers bezeichnet dabei die horizontale Erstreckung des Ausschubträgers in Richtung quer zu seiner Mittenlängsachse.

Die Erfindung bezieht sich insbesondere auf Fahrzeuge mit aufgebauter Betonpumpe. Das Fahrzeug weist einen Mast auf, der als Verteilermast dient und eine Betonförderleitung trägt. Durch die erfindungsgemäße Rahmenabstützung kann sichergestellt werden, dass einem Kippen des Fahrzeugs mit sehr langem Mastausleger, beispielsweise mit einer Länge von 40 Metern oder mehr, entgegengewirkt werden kann.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen. Die Erfindung ist jedoch nicht auf die gezeigte Ausführungsvariante beschränkt. Insbesondere umfasst die Erfindung, soweit es technisch sinnvoll ist, beliebige Kombinationen der technischen Merkmale, die in den Ansprüchen aufgeführt oder in der Beschreibung als erfindungsrelevant beschrieben sind.

Es zeigen:
- Fig. 1: schematische Draufsicht auf eine aus dem Stand der Technik bekannte Rahmenabstützung in einem eingefahrenen Zustand,
- Fig. 2: schematische Draufsicht auf eine aus dem Stand der Technik bekannte Rahmenabstützung beim Ausfahren,
- Fig. 3: schematische Draufsicht auf eine erfindungsgemäße Rahmenabstützung beim Ausfahren in einer ersten Ausgestaltungsform,
- Fig. 4: schematische Draufsicht auf eine erfindungsgemäße Rahmenabstützung in einem eingefahrenen Zustand,
- Fig. 5: schematische Draufsicht auf eine vertikale Abstützeinheit,
- Fig. 6: schematische Darstellung einer vertikalen Abstützeinheit in einer möglichen Ausgestaltungsform,
- Fig. 7: schematische Darstellung einer vertikalen Abstützeinheit in einer weiteren Ausgestaltungsform,
- Fig. 8: schematische Draufsicht auf ein erfindungsgemäßes Fahrzeug.

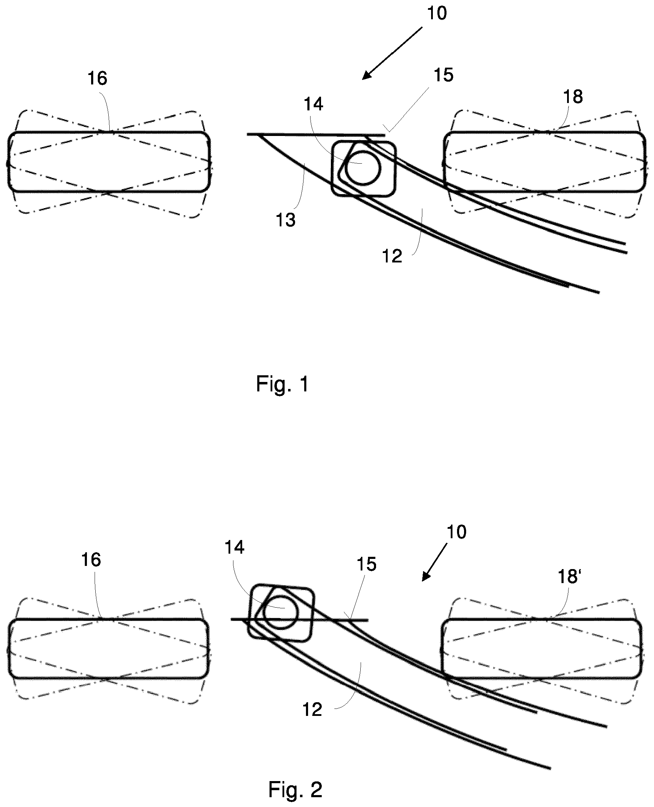

Die Figuren 1 und 2 zeigen eine schematische Draufsicht auf eine aus dem Stand der Technik bekannte Rahmenabstützung 10 in einem eingefahrenen Zustand bzw. beim Ausfahren. Die Rahmenabstützung 10 weist eine fahrzeugfeste Führung 13 für einen in das Fahrzeugprofil ein- und ausziehbaren Ausschubträger 12 auf. Am freien Ende des Ausschubträgers 12 ist mittig eine vertikale Abstützeinheit 14 angeordnet. Im eingefahrenen Zustand sind alle Teile der Stütze 10 innerhalb der Fahrzeugbreite 15 angeordnet.

Die Rahmenabstützung 10 ist so am Fahrzeug angeordnet, dass der Träger 12 zwischen den beiden beweglichen vorderen Achsen 16, 18 aus dem Fahrzeug aus- bzw. eingefahren werden kann. Damit es beim Ein- bzw. Ausfahren des Ausschubträgers 12 nicht zu einer Kollision zwischen der vertikalen Abstützeinheit 14 und den Rädern kommt, muss der Achsabstand zwischen den lenkbaren Vorderachsen 16, 18 vergrößert werden. Hierfür wird die hintere Vorderachse 18 nach hinten versetzt. Dies hat zur Folge, dass sich die nominelle Anzahl der Achsen erhöht. Durch das Versetzen der Achsen entstehen hohe Kosten.

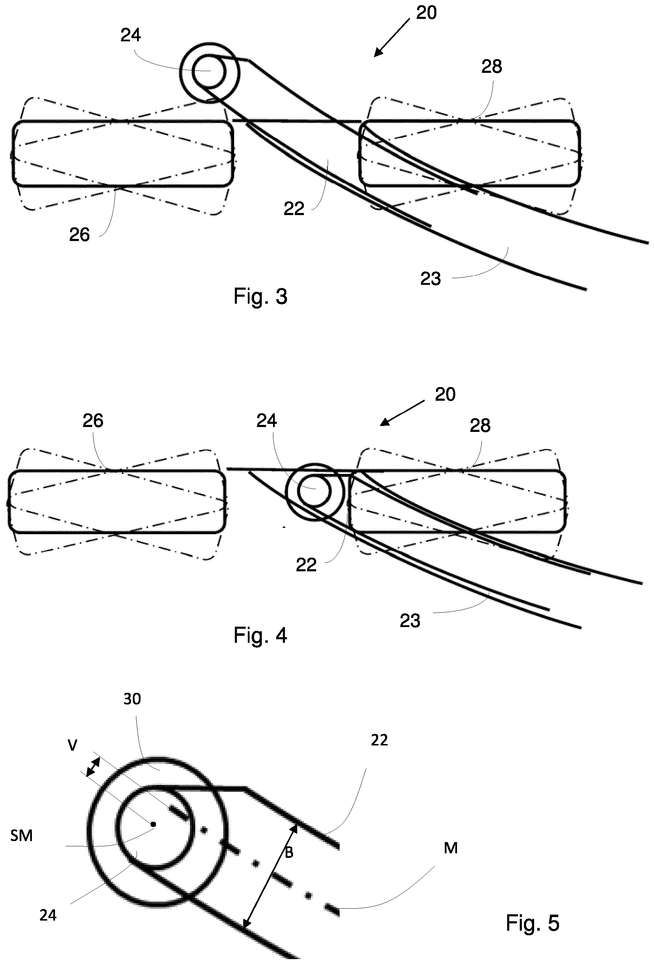

Die Figuren 3 und 4 zeigen eine schematische Draufsicht auf eine erfindungsgemäße Rahmenabstützung 20 beim Ausfahren bzw. in einem eingefahrenen Zustand. Die Rahmenabstützung weist eine Führung 23 auf, die innerhalb des Fahrzeugrahmens angeordnet ist. Die Rahmenabstützung 20 weist ferner einen in den Fahrzeugrahmen ein- bzw. ausfahrbaren Ausschubträger 22 auf, der von der Führung 23 geführt wird. Der Ausschubträger 22 weist an seinem freien Ende eine außermittig angeordnete vertikale Abstützeinheit 24 auf. Außermittig bedeutet, dass die vertikale Mittenlängsachse der Abstützeinheit 24 seitlich versetzt von der Mittenlängsachse, d.h. von der Mittellinie des Ausschubträgers liegt. Bevorzugt ist die vertikale Abstützeinheit 24 nach innen versetzt am Ausschubträger 22, das heißt in Richtung der Fahrzeugmitte, angeordnet. Im eingefahrenen Zustand sind alle Teile der Rahmenabstützung 20 innerhalb der Fahrzeugbreite angeordnet.

Die Rahmenabstützung 20 ist derart am Fahrzeug angeordnet, dass der Ausschubträger 22 zwischen den beiden beweglichen vorderen Achsen 26, 28 aus dem Fahrzeug aus- bzw. eingefahren werden kann. Durch die erfindungsmäße Anordnung der vertikalen Abstützeinheit 24 am Ausschubträger 22 kommt es auch bei LKW-Fahrgestellen mit zwei lenkbaren Vorderachsen mit einem serienmäßigen Abstand zwischen den vorderen Lenkachsen 26, 28 von etwa 170-175 cm beim Aus- bzw. Einfahren des Ausschubträgers 22 nicht zu einer Kollision zwischen vertikaler Abstützeinheit 24 und Rädern. Probleme bei der Zulassung können vermieden werden.

Figur 5 zeigt eine schematische Draufsicht auf eine vertikale Abstützeinheit 24. Erfindungsgemäß ist die vertikale Abstützeinheit 24 seitlich von der Mittenlängsachse M bzw. Mittellinie des Ausschubträgers 22 (in der Figur durch die Strich-Punkt-Linie dargestellt), die in vertikaler Sicht die Kontur des Ausschubträgers 24 halbiert, angeordnet. Das bedeutet, dass die vertikale Abstützeinheit 24 asymmetrisch bzw. außermittig am Ausschubträger 22 angeordnet ist. Hierdurch wird insbesondere erreicht, dass ein serienmäßiger Abstand zwischen den vorderen Lenkachsen 26, 28 eingehalten werden kann. Der bisher nötige Umbau entfällt. Es werden erhebliche Kosten eingespart.

Wie in der Figur 5 zu erkennen ist, beträgt bei dem Ausführungsbeispiel der Versatz V der Mittenlängsachse SM der vertikalen Abstützeinheit 24 gegenüber der Mittellinie M etwa 25% der Breite B des Ausschubträgers 22. Die Mittenlängsachse SM der vertikalen Abstützeinheit 24 liegt noch innerhalb der horizontalen Ausdehnung des Ausschubträgers 22. Dadurch werden die durch den Versatz V in den Ausschubträger 22 eingebrachten Kippmomente hinreichend begrenzt.

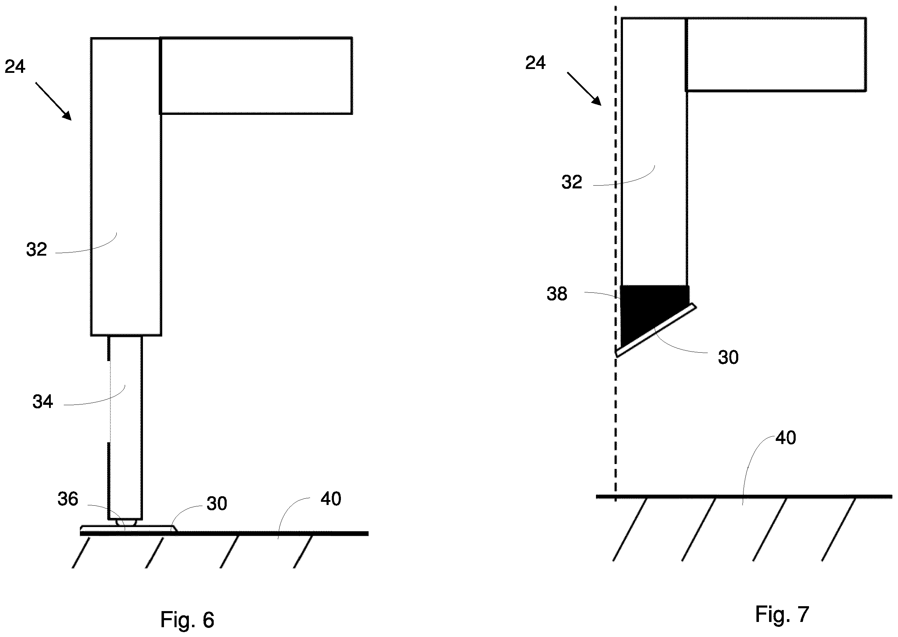

Fig. 6 zeigt eine schematische Darstellung einer vertikalen Abstützeinheit 24 in einer Ausgestaltungsform im ausgefahrenen Zustand. Die vertikale Abstützeinheit 24 ist teleskopierbar ausgebildet. Sie weist ein Außenteleskop 32 auf, das am Ausschubträger 22 angeordnet ist. Ferner weist die vertikale Abstützeinheit 24 ein Innenteleskop 34 auf, das in das Außenteleskop 32 ein- und aus diesem ausfahrbar ist.

Die vertikale Abstützeinheit 24 weist bevorzugt einen runden Querschnitt auf.

Die vertikale Abstützeinheit 24 weist eine Stützfußplatte 30 auf, die an dem freien Ende des Innenteleskops 34 angeordnet ist und bevorzugt rund ausgebildet ist. Die Stützfußplatte 30 dient dazu, den Stützdruck auf eine Standfläche 40 zu übertragen. Bevorzugt ist das Innenteleskop 34 mit der Stützfußplatte über ein Gelenk 36 verbunden. Als Gelenk 36 kann beispielsweise ein Kugelkopf genutzt werden. Durch das Gelenk 36 ist es möglich, die Stützfußplatte 30 beim Hochfahren der vertikalen Abstützeinheit 24 seitlich zu verschwenken. Hierdurch wird erreicht, dass im eingefahrenen Zustand der erfindungsgemäßen Stütze 20 alle Teile der Stütze 20 innerhalb der Fahrzeugbreite 15 liegen.

Fig. 7 zeigt eine schematische Darstellung einer vertikalen Abstützeinheit 24 in einer weiteren Ausgestaltungsform im eingefahrenen Zustand. Die gestrichelte senkrecht verlaufende Linie stellt die Fahrzeugbreite bzw. die Fahrzeugaußenseite dar. Die Abstützeinheit 24 ist teleskopierbar ausgebildet. Sie weist wenigstens ein Außen- 32 und ein Innenteleskop 34 auf. Am freien Ende des Innenteleskops 34 ist über ein Gelenk 36 eine Stützfußplatte 30 angeordnet. Am freien Ende des Außenteleskops 32 ist eine Gummimanschette 38 angeordnet. Wird die Gummimanschette 38 senkrecht zur Fahrtrichtung geschnitten, so weist die Gummimanschette 38 eine rechtwinklige Trapezform auf. Die der Fahrzeugaußenseite 15 zugewandte Seite ist dabei länger ausgebildet als die der Fahrzeugmitte zugewandte Seite. Erreicht beim Einfahren des Innenteleskops 34 die Stützfußplatten 30 die Gummimanschette 38, so wird diese durch die Gummimanschette 38 nach innen geklappt. Hierdurch wird ein Herausragen der Stützfußplatte 30 über die Fahrzeugaußenseite 15 verhindert. Die maximale Fahrzeugbreite wird somit eingehalten.

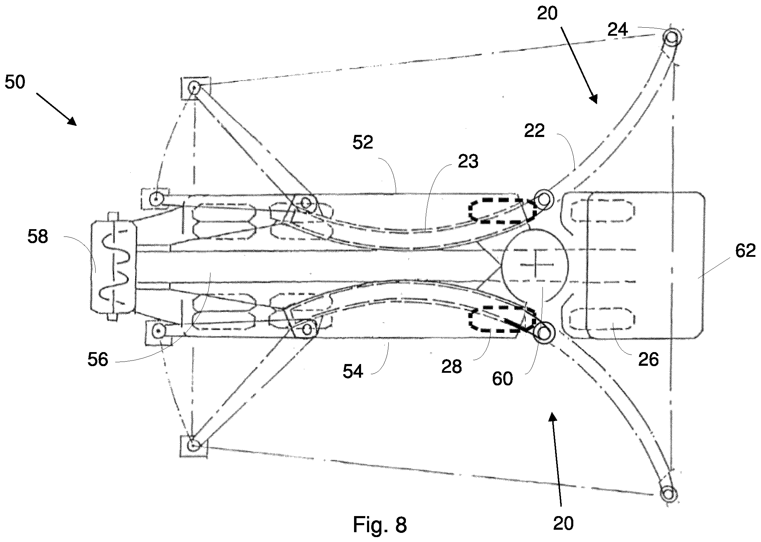

Figur 8 zeigt eine schematische Draufsicht auf ein erfindungsgemäßes Fahrzeug 50. Das Fahrzeug 50 weist ein Fahrerhaus 62 auf. Hinter dem Fahrerhaus 62 befindet sich ein Drehschemel 60 eines Betonverteilermastes 56. Das Fahrzeug weist zwei lenkbare Vorderachsen 26, 28 auf. Am Heck des Fahrzeugs 50 ist ein Fülltrichter 58, über den Beton eingefüllt wird, angeordnet. Das Fahrzeug 50 weist eine Vierpunktabstützung auf. Die vordere Abstützung weist die erfindungsgemäße Rahmenabstützung 20 auf. Es ist aber auch denkbar, dass sowohl die vordere als auch die hintere Rahmenabstützung erfindungsgemäß ausgebildet ist. Durch die erfindungsgemäße Rahmenabstützung wird sichergestellt, dass einem Kippen des Fahrzeugs 50 auch mit sehr langem Mastausleger 56, beispielsweise mit einer Länge von 40 Metern oder mehr, entgegengewirkt werden kann.

Die Führung 23 der erfindungsgemäßen Rahmenabstützung 20 erstreckt sich im Wesentlichen zwischen den Fahrzeugprofillängsseiten 52, 54. Ist die Stütze 20 im eingefahrenen Zustand, dann befinden sich alle Teile der Rahmenabstützung 20 zwischen den Fahrzeugprofillängsseiten 52, 54. Die erfindungsgemäße Rahmenabstützung 20 ist so am Fahrzeug 50 angeordnet, dass der Ausschubträger 22 zwischen den beiden beweglichen vorderen Achsen 26, 28 aus dem Fahrzeug 50 aus- bzw. eingefahren werden kann. Durch die erfindungsmäße Anordnung der vertikalen Abstützeinheit 24 am Ausschubträger 22, nämlich außermittig, kommt es auch bei LKW-Fahrgestellen mit zwei lenkbaren Vorderachsen 26, 28, die einen serienmäßigen Abstand aufweisen, beim Aus- bzw. Einfahren des Ausschubträgers 22 nicht zu einer Kollision zwischen der vertikalen Abstützeinheit 24 und den Rädern.

Die Führung 23 und der Ausschubträger 22 sind bogenförmig ausgebildet. Die Führung 23 verläuft dabei bevorzugt im Bogen tangential zur Fahrzeuglängsrichtung und erstreckt sich dabei von einer der Fahrzeugprofillängsseiten 52, 54 nach innen im Wesentlichen bis zur Fahrzeugmitte und von dieser weiter bis zu derselben Fahrzeugprofillängsseite 52, 54. Hierdurch können besonders lange Ausschubträger 22, die für den Fahrbetrieb im Fahrzeugprofil untergebracht werden können, verwendet werden. Gleichzeitig bleibt ausreichend Platz für eine lange Pumpenbatterie.

## Patentansprüche

1. Rahmenabstützung (20) für ein Fahrzeug (50) aufweisend:
- einen Ausschubträger (22),
- eine Führung (23), an der der Ausschubträger (22) axial beweglich geführt ist, und
- eine vertikale Abstützeinheit (24), wobei die vertikale Abstützeinheit (24) am freien Ende des Ausschubträgers (22) außermittig angeordnet ist,
**dadurch gekennzeichnet, dass** die Mittenlängsachse (SM) der vertikalen Abstützeinheit (24) am freien Ende des Ausschubträgers (22) gegenüber der Mittenlängsachse (M) desselben nach innen, d.h. zur Fahrzeugmitte hin versetzt ist, wobei die Führung (23) und der Ausschubträger (22) bogenförmig ausgebildet sind.

2. Rahmenabstützung (20) nach Anspruch 1, **dadurch gekennzeichnet, dass** die Führung (23) in einem Hohlprofilabschnitt angeordnet ist, mit dem der Ausschubträger (22) ein Teleskop bildet.

3. Rahmenabstützung (20) nach einem der vorangehenden Ansprüche, **dadurch gekennzeichnet, dass** die vertikale Abstützeinheit (24) teleskopierbar ist.

4. Rahmenabstützung (20) nach einem der vorangehenden Ansprüche, **dadurch gekennzeichnet, dass** die vertikale Abstützeinheit (24) einen runden Querschnitt aufweist.

5. Rahmenabstützung (20) nach einem der vorangehenden Ansprüche, **dadurch gekennzeichnet, dass** die vertikale Abstützeinheit (24) eine Stützfußplatte (30) aufweist, die bevorzugt rund ausgebildet ist.

6. Rahmenabstützung (20) nach dem vorangehenden Anspruch, **dadurch gekennzeichnet, dass** die vertikale Abstützeinheit (24) ein Gelenk (36) aufweist, wodurch die Stützfußplatte (30) seitlich verschwenkbar ist.

7. Verwendung der Rahmenabstützung (20) nach einem den Ansprüchen 1 bis 6 zur Abstützung des Fahrzeugrahmens einer Autobetonpumpe.

8. Fahrzeug (50) mit wenigstens einer Rahmenabstützung (20) nach einem der Ansprüche 1 bis 6, wobei sich die Führung (23) im Wesentlichen zwischen den Fahrzeugprofillängsseiten (52, 54) erstreckt.

9. Fahrzeug (50) nach dem vorhergehenden Anspruch, **dadurch gekennzeichnet, dass** die Führung (23) tangential zur Fahrzeuglängsrichtung angeordnet ist und sich von einer der Fahrzeugprofillängsseite (52, 54) nach innen um wesentlich bis zur Fahrzeugmitte und von dieser weiter bis zu derselben Fahrzeugprofilseite erstreckt.

10. Fahrzeug (50) nach Anspruch 8 oder 9, **dadurch gekennzeichnet, dass** die vertikale Abstützeinheit (24) am freien Ende des Ausschubträgers (22) nach innen versetzt, also zur Fahrzeugmitte hin, angeordnet ist.

11. Fahrzeug (50) nach Anspruch 10, **dadurch gekennzeichnet, dass** die Mittenlängsachse (SM) der vertikalen Abstützeinheit (24) gegenüber der Mittenlängsachse (M) des Ausschubträgers (22) am freien Ende desselben um wenigstens 10%, vorzugsweise um wenigstens 25% der Breite (B) des Ausschubträgers (22) nach innen versetzt ist.

12. Fahrzeug (50) nach einem der Ansprüche 8 bis 9, **dadurch gekennzeichnet, dass** das Fahrzeug (50) eine Betonpumpe und einen Verteilermast (56) aufweist.

## Claims

1. A frame support (20) for a vehicle (50), having:
- an extensible carrier (22),
- a guide (23) on which the extensible carrier (22) is guided in an axially movable manner, and
- a vertical support unit (24), wherein the vertical support unit (24) is arranged eccentrically at the free end of the extensible carrier (22)
**characterized in that** the longitudinal center axis (SM) of the vertical support unit (24) is offset inwardly, i.e. toward the vehicle center, with respect to the longitudinal center axis (M) of the extensible carrier (22) at the free end of the latter, wherein the guide (23) and the extensible carrier (22) are configured in an arcuate manner.

2. The frame support (20) as claimed in claim 1, **characterized in that** the guide (23) is arranged in a hollow profile portion with which the extensible carrier (22) forms a telescope.

3. The frame support (20) as claimed in one of the preceding claims, **characterized in that** the vertical support unit (24) is telescopic.

4. The frame support (20) as claimed in one of the preceding claims, **characterized in that** the vertical support unit (24) has a round cross section.

5. The frame support (20) as claimed in one of the preceding claims, **characterized in that** the vertical support unit (24) has an outrigger plate (30) which is preferably configured in a round manner.

6. The frame support (20) according to the preceding claim, **characterized in that** the vertical support unit (24) has a joint (36), as a result of which the outrigger plate (30) is laterally pivotable.

7. The use of the frame support (20) for supporting the vehicle frame of a truck-mounted concrete pump.

8. A vehicle (50) having at least one frame support (20) as claimed in one of claims 1 to 6, wherein the guide (23) extends substantially between the vehicle profile longitudinal sides (52, 54).

9. The vehicle (50) according to the preceding claim, **characterized in that** the guide (23) is arranged tangentially to the vehicle longitudinal direction and extends inward from one of the vehicle profile longitudinal sides (52, 54) substantially as far as the vehicle center and onward therefrom as far as the same vehicle profile side.

10. The vehicle (50) as claimed in claim 8 or 09, **characterized in that** the vertical support unit (24) is arranged in a manner offset inwardly, i.e. toward the vehicle center, at the free end of the extensible carrier (22).

11. The vehicle as claimed in claim 10, **characterized in that** the longitudinal center axis (SM) of the vertical support unit (24) is offset inwardly by at least 10%, preferably by at least 25% of the width (B) of the extensible carrier (22) with respect to the longitudinal center axis (M) of the extensible carrier (22) at the free end of the latter.

12. The vehicle (50) as claimed in one of claims 8 to 9, **characterized in that** the vehicle (50) has a concrete pump and a distributor boom (56).

## Revendications

1. Support de châssis (20) pour un véhicule (50), comprenant
- une poutre télescopique (22),
- un guidage (23), sur lequel la poutre télescopique (22) est guidée en mouvement axial, et
- une unité de soutien verticale (24),
**caractérisé en ce que** l'axe médian longitudinal (SM) de l'unité de soutien verticale (24) est décalé à l'extrémité libre de la poutre télescopique (22) vers l'intérieur, c'est-à-dire vers le milieu du véhicule, par rapport à l'axe longitudinal (M) de celle-ci, le guidage (23) et la poutre télescopique (22) étant réalisés en forme d'arc.

2. Support de châssis (20) selon la revendication 1, **caractérisé en ce que** le guidage (23) est disposé dans une partie de profilé creux, avec laquelle la poutre télescopique (22) forme un télescope.

3. Support de châssis (20) selon l'une quelconque des revendications précédentes, **caractérisé en ce que** l'unité de soutien verticale (24) est télescopique.

4. Support de châssis (20) selon l'une quelconque des revendications précédentes, **caractérisé en ce que** l'unité de soutien verticale (24) présente une section transversale ronde.

5. Support de châssis (20) selon l'une quelconque des revendications précédentes, **caractérisé en ce que** l'unité de soutien verticale (24) présente une plaque de pied d'appui (30), qui est de préférence ronde.

6. Support de châssis (20) selon la revendication précédente, **caractérisé en ce que** l'unité de soutien verticale (24) présente une articulation (36), par laquelle la plaque de pied d'appui (30) peut pivoter latéralement.

7. Utilisation du support de châssis (30) pour le support du châssis de véhicule d'une pompe à béton automotrice.

8. Véhicule (50) avec au moins un support de châssis (20) selon l'une quelconque des revendications 1 à 6, dans lequel le guidage (23) s'étend essentiellement entre les côtés longitudinaux (52, 54) du profilé du véhicule.

9. Véhicule (50) selon la revendication précédente, **caractérisé en ce que** le guidage (23) est disposé tangentiellement à la direction longitudinale du véhicule et s'étend à partir d'un des côtés longitudinaux du profilé du véhicule (52, 54) vers l'intérieur essentiellement jusqu'au milieu du véhicule et à partir de celui-ci ensuite jusqu'au même côté longitudinal du profilé du véhicule.

10. Véhicule (50) selon la revendication 8 ou 9, **caractérisé en ce que** l'unité de soutien verticale (24) est disposée à l'extrémité libre de la poutre télescopique (22) en position décalée vers l'intérieur, c'est-à-dire vers le milieu du véhicule.

11. Véhicule (50) selon la revendication 10, **caractérisé en ce que** l'axe longitudinal central (SM) de l'unité de soutien verticale (24) est décalé vers l'intérieur par rapport à l'axe longitudinal central (M) de la poutre télescopique (22), à l'extrémité libre de celle-ci, d'au moins 10 %, de préférence d'au moins 25 % de la largeur (B) de la poutre télescopique (22).

12. Véhicule (50) selon l'une quelconque des revendications 8 à 9, **caractérisé en ce que** le véhicule (50) présente une pompe à béton et un mât de répartition (56) .
